# EUROPÄISCHE PATENTSCHRIFT

(11) **EP 2 181 496 B1**
(45) Veröffentlichungstag und Bekanntmachung des Hinweises auf die Patenterteilung: **15.06.2016**
(21) Anmeldenummer: 08785217.4
(22) Anmeldetag: 30.07.2008
(51) Int. Cl.: H02K 41/03, H02K 11/00

(54) **ANORDNUNG VON STATORMODULEN IN EINEM LINEARMOTOR**
ARRANGEMENT OF STATOR MODULES IN A LINEAR MOTOR
AGENCEMENT DE MODULES DE STATOR DANS UN MOTEUR LINEAIRE

(30) Priorität: 16.08.2007 DE 102007038845
(43) Veröffentlichungstag der Anmeldung: 05.05.2010
(73) Patentinhaber: DORMA Deutschland GmbH, 58256 Ennepetal (DE)
(72) Erfinder: BUSCH, Sven, 44227 Dortmund (DE)
(74) Vertreter: Balder IP Law, S.L.
(86) Internationale Anmeldenummer: PCT/EP2008/006271
(87) Internationale Veröffentlichungsnummer: WO 2009/021629

(56) Entgegenhaltungen:
- EP-A- 0 433 830
- WO-A-2006/074783
- JP-A- 2000 245 128
- US-A1- 2002 047 315

## Beschreibung

Die Erfindung betrifft eine Anordnung von Statormodulen in einem Linearmotor.

Linearmotoren an sich sind bekannt. Um eine Position eines Läufers ermitteln zu können, weisen Linearmotor-Statoren Wegsensoren üblicherweise in Form von Hall-Sensoren auf. Üblicherweise sind die Hall-Sensoren in dem Linearmotor-Stator derart integriert, dass sie zwischen Spulen solch eines Stators angeordnet sind. Dies hat den Nachteil, dass die Hall-Sensoren gegen magnetische Einflüsse abgeschirmt werden müssen. Diese magnetischen Einflüsse entstehen aufgrund stromdurchflossener Spulenwicklungen im Stator und aufgrund eines eventuell vorhandenen magnetischen Rückschlusskörpers des Stators. Das Problem besteht nun darin sicherzustellen, dass die Wegsensoren weiterhin einen Läufers des Linearmotors erfassen können müssen. Dadurch wird der Aufbau solch eines Stators relativ teuer.

Die Dokumente WO 2006/074783 A1 und JP2000245128 offenbaren ein magnetisches Antriebssystem mit einem Wegmesssystem.

Aufgabe der Erfindung ist es, die vorstehenden Nachteile zu verringern oder zu beseitigen.

Die Aufgabe wird mittels eines Linearmotors gemäß Anspruch 1 gelöst. Vorteilhafte Weiterbildungen sind in den Unteransprüchen angegeben.

Bei einem erfindungsgemäßen Linearmotor, der einen Stator und zumindest einen Läufer umfasst, weist der Stator zumindest zwei Statormodule auf. Jedes Statormodul weist eine Spulenanordnung und, in Längserstreckung des jeweiligen Statormoduls gesehen, zumindest an einem Ende einen Wegsensor auf. D. h. die Wegsensoren sind separat von der jeweiligen Spulenanordnung ausgebildet. Dies hat Vorteile in der Herstellung, Spulenanordnung und Wegsensoren unabhängig voneinander hergestellt und geprüft werden können. Zudem ist eine magnetische Abschirmung der Wegsensoren einfacher zu bewerkstelligen, da sie nicht innerhalb der Spulenanordnung vorgesehen werden muss. Die Wegsensoren und die Spulenanordnung können in ein Gehäuse eingesetzt sein, dass seinerseits besagte Abschirmung bereitstellt, und zwar gegen magnetische Einflüsse der Spulenanordnung und ggf. gegen mögliche Einflüsse einer Spulenanordnung eines anderen Statormoduls. Jedes Statormodul ist entlang eines Verfahrwegs des jeweiligen Läufers in einem Bereich des jeweiligen Statormoduls angeordnet. Jeder Wegsensor weist einen Erfassungsbereich auf, innerhalb dessen er den Läufer erfassen kann, sofern sich dieser zumindest zu einem Teil im Erfassungsbereich befindet. Jede Spulenanordnung weist einen Wechselwirkungsbereich auf, innerhalb dessen die Spulenanordnung, bei einer Bestromung, mit dem Läufer in Wechselwirkung tritt und diesen in eine Antriebsrichtung drängt, insofern sich der Läufer zumindest mit einem Teil in dem Wechselwirkungsbereich befindet. Die zumindest zwei Statormodule und der zumindest eine Läufer sind derart angeordnet, dass sich jederzeit ein Teil des zumindest einen Läufers zumindest im Erfassungsbereich eines Wegsensors und ein anderer Teil des dieses Läufers zumindest im Wechselwirkungsbereich einer Spulenanordnung der zumindest zwei Statormodule befindet. Dadurch ist gewährleistet, dass eine Position des zumindest einen Läufers jederzeit ermittelt werden kann und dieser mittels des Stators jederzeit in eine Antriebsrichtung bewegt werden kann.

Vorzugsweise sind zwei unmittelbar benachbart angeordnete Statormodule der zumindest zwei Statormodule in bezug auf eine Ausrichtung ihrer Wegsensoren zueinander hinsichtlich des jeweils unmittelbar benachbart angeordneten, anderen Statormoduls gemäß einer Länge des zumindest einen Läufers, gemäß einem Verfahrweg des zumindest einen Läufers und gemäß einem vorbestimmten Verlauf einer Antriebskraft des Linearmotors in Abhängigkeit von dem Verfahrweg des Läufers angeordnet. Weiterhin vorzugsweise sind die zwei unmittelbar benachbart angeordneten Statormodule mit einander zugewandten Wegsensoren angeordnet.

Vorzugsweise weisen zwei unmittelbar benachbart angeordnete Statormodule der zumindest zwei Statormodule zueinander einen Abstand gemäß der Länge des zumindest einen Läufers, gemäß dem Verfahrweg des zumindest einen Läufers und gemäß dem vorbestimmten Verlauf der Antriebskraft des Linearmotors in Abhängigkeit vom Verfahrweg des zumindest einen Läufers auf.

Vorzugsweise sind die Wegsensoren mittels Hall-Sensoren gebildet.

Ferner weist der Linearmotor vorzugsweise eine Ansteuerschaltung auf, die mit den zumindest zwei Statormodulen gekoppelt und eingerichtet ist, Erfassungssignale der Wegsensoren aufzunehmen bzw. einzulesen, auf Basis der Erfassungssignale von den Wegsensoren eine Position des zumindest einen Läufers in bezug auf den Stator zu ermitteln und die zumindest zwei Statormodule gemäß der ermittelten Position des zumindest einen Läufers anzusteuern. Dadurch ist es beispielsweise möglich, das Erreichen einer Endlage des Läufers zu ermitteln und ggf. den Stator abzuschalten.

Die Ansteuerschaltung ist vorzugsweise ferner eingerichtet, zumindest eine Spulenanordnung eines der zumindest zwei Statormodule abzuschalten, wenn die Ansteuerschaltung ermittelt, dass die ermittelte Position des jeweiligen Läufers einem Unterschreiten eines vorbestimmten ersten Eindringmaßes dieses Läufers in einen vorbestimmten Abschnitt des Wechselwirkungsbereichs der einen Spulenanordnung entspricht. Es wird somit geprüft, in welchen Teil des Wechselwirkungsbereichs der jeweiligen Spulenanordnung der Läufer eingedrungen ist. Dies ist erforderlich, um beispielsweise verhindern zu können, dass die jeweilige Spulenanordnung abgeschaltet wird, wenn der Läufer von einer Endlage kommend in den Wechselwirkungsbereich dieser jeweiligen Spulenanordnung eindringt und den Wechselwirkungsbereich durchfahren soll. Das Abschalten von Spulenanordnungen hat den Vorteil, dass so wenig Energie wie möglich verschwendet wird.

Zudem kann die Ansteuerschaltung eingerichtet sein, zumindest eine Spulenanordnung eines der zumindest zwei Statormodule abzuschalten, wenn die Ansteuerschaltung ermittelt, dass die ermittelte Position des Läufers einer vorbestimmten Endlage des zumindest einen Läufers entspricht. Dies ist erforderlich, um die Endlagenpositionierung des zumindest einen Läufers zu gewährleisten, sodass die jeweilige Spulenanordnung den zumindest einen Läufer immer noch, nach Zuschalten, beispielsweise in entgegengesetzte Richtung antreiben bzw. bewegen kann.

Zusätzlich oder alternativ kann die Ansteuerschaltung ferner eingerichtet sein, zumindest eine Spulenanordnung eines der zumindest zwei Statormodule zuzuschalten, d. h. zu bestromen, wenn die Ansteuerschaltung ermittelt, dass die ermittelte Position des jeweiligen Läufers einem vorbestimmten zweiten Eindringmaß des zumindest einen Läufers in den Wechselwirkungsbereich der einen Spulenanordnung oder einem Überschreiten dieses zweiten Eindringmaßes entspricht. Dies ist insbesondere sinnvoll, wenn der zumindest eine Läufer von einem anderen Statormodul kommend in den Wechselwirkungsbereich der einen Spulenanordnung eindringt und ein sofortiges Zuschalten der einen Spulenanordnung nicht erwünscht ist. Diese Maßnahme dient dem Zweck, dass der Stator nicht unnütz im Leerlauf arbeitet und damit Energie verschwendet wird.

Erfindungsgemäß können das erste und das zweite Eindringmaß gleich sein. Damit ist ein Zu- bzw. Abschalten der jeweiligen Spulenanordnung an im Wesentlichen ein und derselben Position des zumindest einen Läufers in bezug auf die jeweilige Spulenanordnung möglich.

Weitere Merkmale und Vorteile der Erfindung ergeben sich aus der nachfolgenden Beschreibung bevorzugter Ausführungsformen.

Es zeigen:
- Figur 1:: eine Anordnung von Statormodulen gemäß einer ersten Ausführungsform der Erfindung,
- Figur 2:: eine Anordnung von Statormodulen gemäß einer zweiten Ausführungsform der Erfindung,
- Figur 3:: eine Anordnung von Statormodulen
- Figur 4:: eine Anordnung von Statormodulen.

Ein Linearmotor 1 weist einen Läufer 2 und einen Stator 10 auf.

Der Läufer 2 ist vorzugsweise aus einer Reihe von Permanentmagneten gebildet, die sich entlang eines Verfahrwegs eines mittels diesem zu bewegenden Teils 3 erstreckt. Vorzugsweise sind bei unmittelbar benachbarten Permanentmagneten der eine mit einer Nordpolseite und der andere mit einer Südpolseite zu einem Stator 10 des Linearmotors 1 zugewandt angeordnet. Alternativ kann der Läufer 2 mittels eines magnetisierbaren Teils gebildet sein. Der Läufer 2 ist vorzugsweise auf bzw. an einem entlang eines Verfahrweges zu bewegenden Teil 3 oder auf bzw. an dessen Aufhängung ortsfest angebracht. Ist das zu bewegende Teil 3 mittels Laufwagen aufgehängt, die in einer oder mehreren Führungsschienen geführt sind, kann der Läufer 2 an einer dem Stator 10 zugewandten Fläche des jeweiligen Laufwagens oder auf einer dem Stator 10 zugewandten Fläche eines die Laufwagen verbindenden Profils ortsfest angebracht sein.

Der Stator ist ortsfest, beispielsweise an einem Tragprofil angebracht oder in diesem untergebracht. Der Stator 10 weist zumindest zwei Statormodule 11 auf, die jeweils zumindest einen Wegsensor 12 aufweisen, die in Längserstreckung des zugehörigen Statormoduls 11 gesehen an einem Ende von ihm ausgebildet bzw. angeordnet ist. Jedes Statormodul 11 weist ferner eine Spulenanordnung 13 auf, die sich, in Längserstreckung des jeweiligen Statormoduls 11 gesehen, an den jeweiligen zumindest einen Wegsensor 12 anschließend angeordnet ist. Die Spulenanordnungen 13, 13 sind jeweils aus einer Reihe von, in Längserstreckung des jeweiligen Statormoduls 11 gesehen, hintereinander angeordneten Spulen gebildet, die gemäß einem Ansschlussschema mit Wicklungsdraht bewickelt und untereinander verschaltet sind. Die Wegsensoren 12 sind jeweils vorzugsweise mittels Hall-Sensoren gebildet.

Der Begriff Wechselwirkungsbereich bezeichnet eine räumliche Ausdehnung eines magnetischen Wechselfeldes, innerhalb der das magnetische Wechselfeld mit dem Läufer 2 in Antriebs-Wechselwirkung tritt, sobald sich dieser zumindest teilweise innerhalb dieser räumlichen Ausdehnung befindet. Der Wechselwirkungsbereich kann auf einzelne Spulen oder auch auf eine gesamte Spulenanordnung 13 eines Statormoduls 11 bezogen sein. Das magnetische Wechselfeld wird mittels Bestromens Statormoduls 11, d. h. seiner Spulenanordnung 13 und damit seiner einzelnen Spulen, gebildet.

Der Begriff Erfassungsbereich bezeichnet eine räumliche Ausdehnung eines Bereichs, innerhalb dessen ein Wegsensor 12 in der Lage ist, einen Läufer 2 zu erfassen, sofern sich dieser zumindest teilweise innerhalb dieser Ausdehnung befindet.

In den Figuren sind nur die für die Erfindung relevanten Teile dargestellt. Der Läufer 2 bzw. das zu bewegende Teil 3 sind in den Figuren in einer ersten maximal möglichen Endlage des Läufers 2 gezeigt. Bezugszeichen 2' und 3' bezeichnen das zu bewegende Teil 3 bzw. den Läufer 2 in einer zweiten, maximal möglichen Endlage des Läufers 2. Ein Abstand zwischen den Endlagen definiert eine maximale Verfahrwegstrecke für den jeweiligen Läufer 2. Der Läufer 2 muss folgende Bedingungen erfüllen:
- - Länge des Läufers 2 >: Maximum von Abständen zwischen Wechselwirkungsbereichen von Spulenanordnungen 13 jeweils zweier unmittelbar benachbart angeordneter Statormodule 11
- - Länge des Läufers 2 >: Maximum von Abständen zwischen Erfassungsbereichen jeweils zweier unmittelbar benachbart angeordneter Wegsensoren 12

Maximal mögliche Endlagen des Läufers 2 lassen sich festlegen, sofern ein Verfahrweg des Läufers 2 nicht umlaufend gestaltet ist. Eine jeweilige maximal mögliche Endlage des Läufers 2 ist dann auf ein jeweiliges Statormodul 11 bezogen, das lediglich zu einem anderen Statormodul 11 unmittelbar benachbart angeordnet ist. Dieses jeweilige Statormodul 11 stellt somit in bezug auf den Stator 10 ein End-Statormodul 11 dar. Ist an einem Ende solch eines End-Statormoduls 11, welches Ende zugleich ein Ende des Stators 10 bildet, eine End-Spulenanordnung 13 angeordnet, ist der Läufer 2 in bezug auf dieses End-Statormodul 11 in einer zugeordneten maximal möglichen Endlage so positioniert, dass er sich von einem der End-Spulenanordnung 13 unmittelbar benachbarten End-Wegsensor 12 in Richtung End-Spulenanordnung 13 erstreckend angeordnet ist und sich gerade noch im Erfassungsbereich dieses End-Wegsensors 12 befindet. Ist an besagtem Ende solch eines End-Statormoduls 11 ein End-Wegsensor 12 angeordnet, ist der Läufer 2 in bezug auf das End-Statormodul 11 in einer zugeordneten maximal möglichen Endlage so positioniert, dass er sich von einer dem End-Wegsensor 12 unmittelbar benachbarten End-Spulenanordnung 13 in Richtung End-Wegsensor 12 erstreckend angeordnet ist und sich gerade noch im Wechselwirkungsbereich dieser End-Spulenanordnung 13 befindet.

Ein Abstand zwischen maximal möglichen Endlagen stellt somit eine maximal mögliche Verfahrwegstrecke dar, innerhalb der der Läufer 2 und damit das zu bewegende Teil 3 bewegt werden können, ohne dass der Läufer 2 aus einem Wegsensor-Erfassungsbereich und/oder außer Antriebs-Wechselwirkung mit dem Stator 10 gelangt.

Im Fall eines umlaufenden Verfahrwegs, wie dies beispielsweise bei Kreisschiebetüren der Fall sein kann, sind keine maximalen Endlagen möglich. Hier sind andere Lösungen vorzusehen. Beispielsweise können Endlagen mittels Endanschlagschaltern oder einer Auswertung der beispielsweise mittels der Wegsensoren 12 ermittelten Position des Läufers 2 bzw. des zu bewegenden Teils 3 und einer daraufhin erfolgenden entsprechenden Ansteuerung des Linearmotors 1 erfolgen.

In den Figuren erfolgen ein Antrieb und damit eine Bewegung des jeweils dargestellten Läufers 2 von links nach rechts.

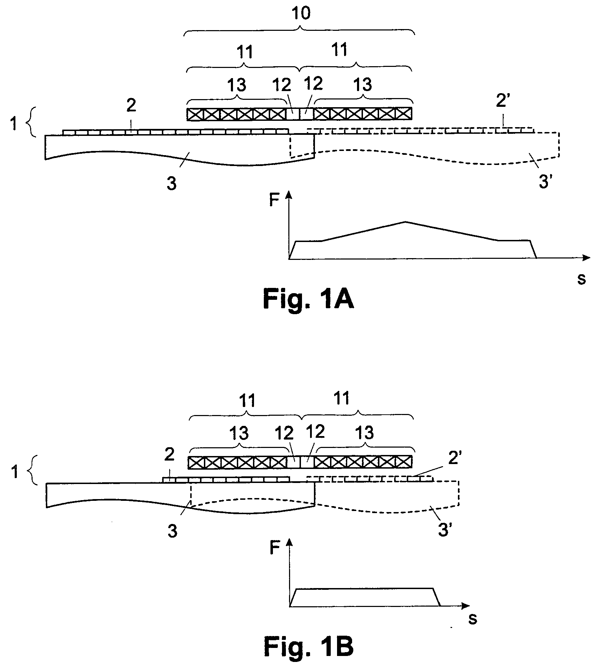

Gemäß einer in Figur 1A gezeigten ersten Ausführungsform der Erfindung weisen Statormodule 11, 11 jeweils vorzugsweise eine Spulenanordnung 13 und einen Wegsensor 12 auf und sind zu Zwecken der Veranschaulichung weisen einen gleichen Aufbau auf. Die Wegsensoren 12, 12 sind an einander zugewandten Enden der Statormodule 11, 11 ausgebildet. Die Statormodule 11, 11 erstrecken sich jeweils entlang eines Bereichs eines beispielhaft linearen Verfahrwegs des zu bewegenden Teils 3 im Bereich des jeweiligen Statormoduls 11. Bei der gezeigten Anordnung stoßen die Statormodule 11, 11 aneinander an, d. h. sie weisen zueinander einen sehr geringen oder keinen Abstand auf. Vorzugsweise folgt eine Form eines jeweiligen Statormoduls 11, in Längserstreckung gesehen, einem Verlauf des Verfahrwegs des zu bewegenden Teils 3 im Bereich des jeweiligen Statormoduls 11.

Ein unten in Figur 1A dargestelltes Diagramm zeigt schematisch einen Verlauf einer Antriebskraft F des Linearmotors 1 in Abhängigkeit von einer Verfahrwegstrecke s des Läufers 2.

Das unten in Figur 1A dargestellte Diagramm stellt schematisch eine Antriebskraft F des Linearmotors 1 in Abhängigkeit einer Verfahrwegstrecke s dar. Zu Beginn einer Bewegung des Läufers 2, d. h. in der dargestellten ersten Endlage, steht der Läufer 2 mit allen Spulen der linken Spulenanordnung 13 in Wechselwirkung.

Unter der Voraussetzung, dass die Spulenanordnungen 13, 13, oder zunächst nur die linke Spulenanordnung 13, kontinuierlich bestromt werden, steigt während eines Bewegens des Läufers 2 nach rechts in Figur 1A die Antriebskraft F des Linearmotors 1 zunächst auf eine Kraft an, die alle Spulen der linken Spulenanordnung 13 auf den Läufer 2 ausüben können, insofern sich der Läufer in Wechselwirkungsbereichen all dieser Spulen befindet.

Daraufhin bleibt die Antriebskraft F des Linearmotors 1 bis zu einer Position des Läufers 2 konstant, kurz bevor die rechte Spulenanordnung 13 mit dem Läufer 2 in Wechselwirkung tritt, da der Läufer 2 eine Länge aufweist, die größer oder gleich einer Summe einer Länge des linken Statormoduls 11 und des rechten Wegsensors 12 ist.

Tritt der Läufer 2 in den Wechselwirkungsbereich der rechten Spulenanordnung 13 ein, verstärkt das magnetische Wechselfeld in den mit dem Läufer 2 in Wechselwirkung stehenden Spulen der rechten Spulenanordnung 13 die Antriebskraft F der linken Spulenanordnung 13, solange sich der Läufer 2 noch in den Wechselwirkungsbereichen aller Spulen der linken Spulenanordnung 13 befindet. D. h. die Antriebskraft F des Linearmotors steigt mit fortwährender Bewegung des Läufers 2 an.

Kurz bevor der Läufer 2 beginnt, aus Wechselwirkungsbereichen von Spulen der linken Spulenanordnung 13, d. h. zuerst von der linken Spule in Figur 1A, zu gelangen, ist eine maximale Antriebskraft F des Linearmotors 1 erreicht. Aufgrund der Länge des in Figur 1A dargestellten Läufers 2 befindet sich dieser bereits im Wechselwirkungsbereich aller Spulen der rechten Spulenanordnung 13. Der Läufer 2 gelangt bei fortwährender Bewegung aus Wechselwirkungsbereichen immer mehr Spulen der linken Spulenanordnung 13 heraus, was zu einer Verringerung der Antriebskraft F des Linearmotors 1 führt. Gelangt der Läufer 2 aus dem Wechselwirkungsbereich der linken Spulenanordnung 13 selbst, bleibt die Antriebskraft F des Linearmotors 1 konstant, da sich der Läufer 2 bereits in den Wechselwirkungsbereichen aller Spulen der rechten Spulenanordnung 13 befindet.

Bei der in Figur 1A gezeigten Anordnung ergibt sich somit ein über den maximal möglichen Verfahrweg symmetrischer Antriebskraftverlauf, wobei die Antriebskraft F des Linearmotors 1 bis zu etwa der Hälfte des Verfahrwegs und damit die Geschwindigkeit des Läufers 2 ansteigt und danach abfällt.

Figur 1B zeigt die Anordnung von Figur 1A mit dem Unterschied, dass der Läufer 2 eine Länge aufweist, die gleich einer Summe der Länge des linken Statormoduls 11 und der Länge des Wegsensors 12 des rechten Statormoduls 11 ist. Dies bedeutet, dass, sobald der Läufer 2 aus Wechselwirkungsbereichen von Spulen der linken Spulenanordnung 13 gelangt, in gleichem Maße in Wechselwirkungsbereiche von Spulen der rechten Spulenanordnung 13 gelangt. Damit ist im Übergangsbereich zwischen den Spulenanordnungen 13 eine nahezu konstant verlaufende Antriebskraft F des Linearmotors 1 erreichbar, was über den gesamten Verfahrweg des Läufers 2 einen nahezu konstanten Verlauf der Antriebskraft F des Linearmotors 1 ergibt. Der maximal mögliche Verfahrweg fällt gegenüber der Anordnung von Figur 1A vergleichsweise kürzer aus.

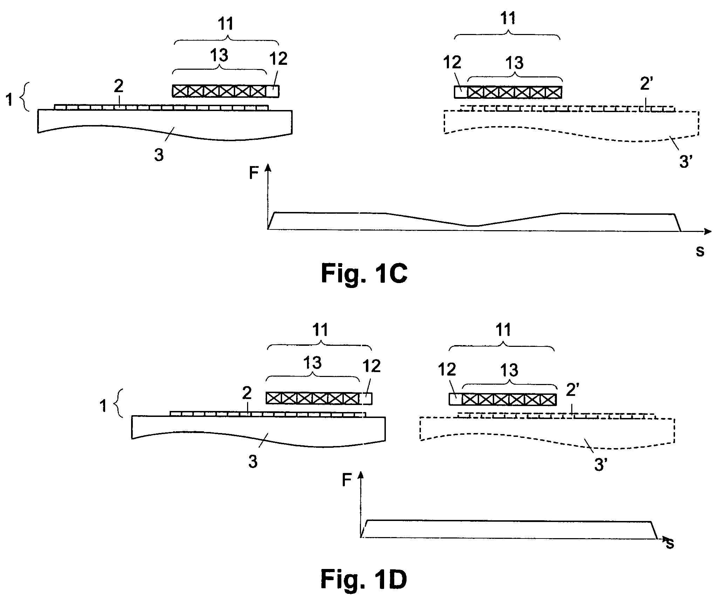

Figur 1C zeigt die Anordnung von Figur 1A mit dem Unterschied, dass die Statormodule 11, 11 im Abstand zueinander angeordnet sind. Ein maximaler Abstand zwischen den Statormodulen 11, 11 wird durch die Notwendigkeit bestimmt, dass sich der Läufer 2 jederzeit im Wechselwirkungsbereich zumindest einer der Spulenanordnungen 13, 13 und im Erfassungsbereich zumindest eines der Wegsensoren 12, 12 befinden muss. Bei einer Bewegung des Läufers 2 bleibt dieser zunächst im Wechselwirkungsbereich aller Spulen der linken Spulenanordnung 13. Nach einer vorbestimmten Verfahrwegstrecke des Läufers 2 gelangt dieser nach und nach aus Wechselwirkungsbereichen von Spulen der linken Spulenanordnung 13, befindet sich allerdings noch nicht im Wechselwirkungsbereich der rechten Spulenanordnung 13. Dies führt bei fortwährendem Bewegen des Läufers 2 zu einem Abfall in der Antriebskraft F des Linearmotors 1. Kurz bevor der Läufer 2 den Wechselwirkungsbereich der linken Spulenanordnung 13 verlässt, gelangt er in den Wechselwirkungsbereich der rechten Spulenanordnung 13. In dieser Phase der Bewegung bleibt die Antriebskraft F nahezu konstant. Bei fortwährender Bewegung verlässt der Läufer 2 nun den Wechselwirkungsbereich der linken Spulenanordnung 13 und gelangt in Wechselwirkungsbereiche immer mehr Spulen der rechten Spulenanordnung 13, was zu einem Anstieg in der Antriebskraft F des Linearmotors 1 führt. Befindet sich der Läufer 2 in den Wechselwirkungsbereichen aller Spulen der rechten Spulenanordnung 13, bleibt die Antriebskraft F des Linearmotors 1 nun bei fortwährender Bewegung des Läufers 2 konstant.

Bei der in Figur 1C gezeigten Anordnung ergibt sich somit wieder ein über den maximal möglichen Verfahrweg symmetrischer Antriebskraftverlauf, wobei die Antriebskraft F des Linearmotors 1 bis zu etwa der Hälfte des Verfahrwegs und damit die Geschwindigkeit des Läufers 2 zunächst im Wesentlichen konstant sind, danach abfallen, wieder ansteigen und in einem letzten Bereich des Verfahrwegs wieder konstant sind. Mit solch einer Anordnung ist ein vergleichsweise maximaler Verfahrweg realisierbar.

Figur 1D ist eine Kombination der in Figuren 1B und 1C dargestellten Anordnungen. D. h. die Statormodule 11, 11 weisen zueinander einen Abstand auf. Der Läufer 2 hat eine Länge, die gleich einer Summe der Länge des linken Statormoduls 11, eines Abstands der Statormodule 11, 11 zueinander und der Länge des Wegsensors 12 des rechten Statormoduls 11 ist. Dadurch ist ein analog zur Anordnung gemäß Figur 1B nahezu konstanter Verlauf in der Antriebskraft F des Linearmotors 1 erreichbar. Der maximal mögliche Verfahrweg fällt allerdings gegenüber der Anordnung von Figur 1B vergleichsweise länger aus.

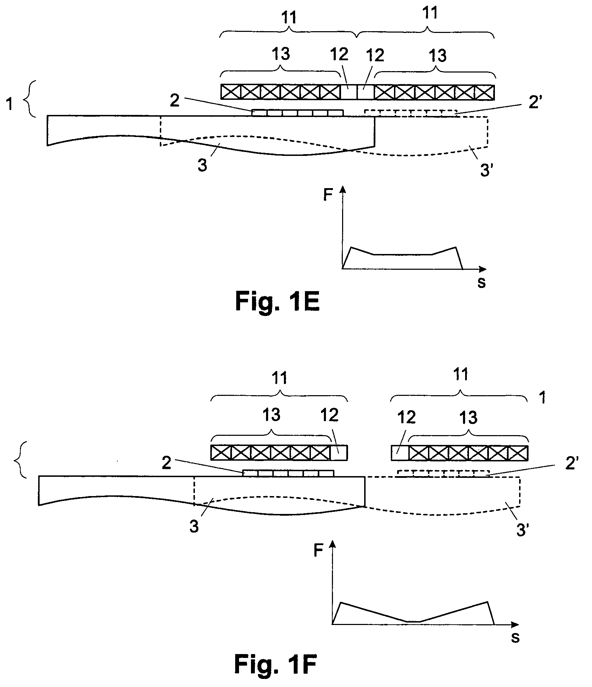

Figur 1E zeigt die Anordnung von Figur 1A mit dem Unterschied, dass der Läufer 2 eine derartige Länge aufweist, das er komplett im Wechselwirkungsbereich der linken Spulenanordnung 13 und im Erfassungsbereich des linken Wegsensors 12 aufgenommen ist. Dies bedeutet, dass der Läufer 2 bei beginnender Bewegung bereits aus Wechselwirkungsbereichen von Spulen der linken Spulenanordnung 11 gelangt, obwohl er sich noch nicht im Wechselwirkungsbereich der rechten Spulenanordnung 13 befindet. Solange sich der Läufer 2 noch nicht im Wechselwirkungsbereich der rechten Spulenanordnung 13 befindet, fällt somit die Antriebskraft F des Linearmotors 1 ab. Gelangt der Läufer 2 in den Wechselwirkungsbereich der rechten Spulenanordnung 13, bleibt die Antriebskraft F des Linearmotors 1 im Wesentlichen konstant, solange sich der Läufer 2 noch im Wechselwirkungsbereich der linken Spulenanordnung 13 befindet. Gelangt der Läufer 2 aus dem Wechselwirkungsbereich der linken Spulenanordnung 11 heraus, führt dies zu einem Anstieg der Antriebskraft F des Linearmotors 1. Dadurch ist ein Betrieb möglich, bei dem die Antriebskraft F des Linearmotors 1 und damit die Geschwindigkeit des Läufers 2 in bezug auf einen maximal möglichen Verfahrweg zu Beginn und am Ende maximal sind, und in einem zwischenliegenden Bereich des Verfahrwegs geringer und über eine vorbestimmte Verfahrwegstrecke hinweg nahezu konstant sind.

Figur 1F zeigt die Anordnung von Figur 1E mit dem Unterschied, dass die Statormodule 11, 11 im Abstand zueinander angeordnet sind. Die Antriebskraft fällt auf eine kleinere minimale Antriebskraft F des Linearmotors 1 als bei der in Figur 1E gezeigten Anordnung. Die Antriebskraft F des Linearmotors 1 bleibt allerdings über eine kürzere Verfahrwegstrecke hinweg konstant als bei der in Figur 1E gezeigten Anordnung und steigt danach wieder an. D. h. der Abstand zwischen den Statormodulen 11, 11 bestimmt die minimale Antriebskraft F des Linearmotors 1 sowie deren Konstanz in bezug auf den maximal möglichen Verfahrweg des Läufers 2.

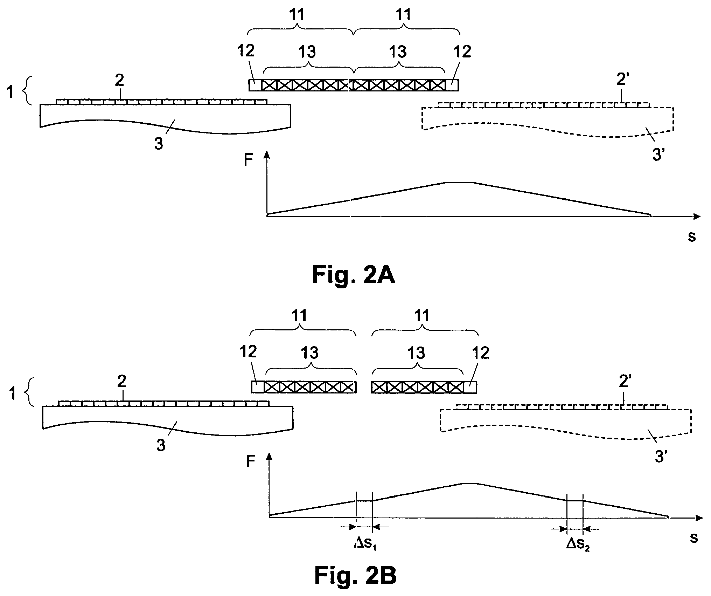

Eine in Figur 2A gezeigte Anordnung gemäß einer zweiten Ausführungsform der Erfindung unterscheidet sich von der in Figur 1A gezeigten Anordnung dadurch, dass die Wegsensoren 12, 12 an einander abgewandten Enden der Statormodule 11, 11 ausgebildet sind. Da die Statormodule 11, 11 zueinander praktisch keinen Abstand aufweisen, bilden die Statormodule 11, 11 ein virtuelles einziges Statormodul 11, das an beiden Enden jeweils einen Wegsensor 12 mit dazwischen angeordneter Spulenanordnung 13 aufweist.

Zu Beginn einer Bewegung des Läufers 2 gelangt dieser nach und nach in immer mehr Wechselwirkungsbereiche von Spulen zunächst der linken und daraufhin auch der rechten Spulenanordnung 13, 13, was zu einem Anstieg in der Antriebskraft F des Linearmotors 1 und damit der Geschwindigkeit des Läufers 2 führt. Solange sich daraufhin der Läufer 2 im Wechselwirkungsbereich aller Spulen sowohl der linken als auch der rechten Spulenanordnung 13, 13 befindet, bleibt die Antriebskraft F des Linearmotors 1 nahezu konstant. Ab einer vorbestimmten Verfahrwegstrecke beginnt der Läufer 2 Wechselwirkungsbereiche von Spulen zunächst der linken und daraufhin auch der rechten Spulenanordnung 13, 13 zu verlassen, was zu einem Abfall in der Antriebskraft F des Linearmotors 1 führt.

Bei der in Figur 2A dargestellten Anordnung entsprechen Anfangs- und End-Antriebskraft F in bezug auf die Verfahrwegstrecke s des Läufers 2 einer Antriebskraft F, die aufgrund einer Wechselwirkung lediglich einer Spule mit einem absolut notwendigen, mit der Spule in Wechselwirkung stehenden Teil des Läufers 2 entsteht. Die Länge des Läufers 2 beeinflusst die Dauer der Konstanz der maximal erreichbaren Antriebskraft F des Linearmotors 1 in bezug auf die Verfahrwegstrecke s. Bei der in Figur 2A gezeigten Anordnung ergibt sich somit ein über den maximal möglichen Verfahrweg hinweg gesehen symmetrischer Antriebskraftverlauf.

Figur 2B zeigt die Anordnung von Figur 2A mit dem Unterschied, dass die Statormodule 11, 11 im Abstand zueinander angeordnet sind. Der Abstand zwischen den Statormodulen 11, 11 beeinflusst den Verlauf der Antriebskraft F des Linearmotors 1 in Abhängigkeit von der Verfahrwegstrecke s des Läufers 2 in der Weise, dass die Antriebskraft F des Linearmotors 1 konstant ist, solange sich der Läufer 2 innerhalb der Wechselwirkungsbereiche aller Spulen der linken Spulenanordnung 13 aber noch nicht im Wechselwirkungsbereich der rechten Spulenanordnung 13 befindet. Das gleiche gilt für den Fall, dass sich der Läufer 2 im Verlauf seiner Bewegung nicht mehr im Wechselwirkungsbereich der linken Spulenanordnung 13 aber innerhalb der Wechselwirkungsbereiche aller Spulen der rechten Spulenanordnung 13 befindet. D. h. die ansteigende bzw. abfallende Kurvenabschnitte der Antriebskraft F des Linearmotors 1 in Abhängigkeit der Verfahrwegstrecke s des Läufers 2 weisen gemäß dem Diagramm in Figur 2B Abschnitte mit konstanter Antriebskraft F jeweils über einen vorbestimmten Abschnitt Δs₁ bzw. Δs₂ der Verfahrwegstrecke s auf.

Die Abschnitte Δs₁, Δs₂ werden durch den Abstand der Statormodule 11, 11 zueinander bestimmt. D. h. mit größer werdendem Abstand zwischen den Statormodulen vergrößern sich die Abschnitte Δs₁, Δs₂.

Der Antriebskraftverlauf ist wiederum in bezug auf einen maximal möglichen Verfahrweg symmetrisch.

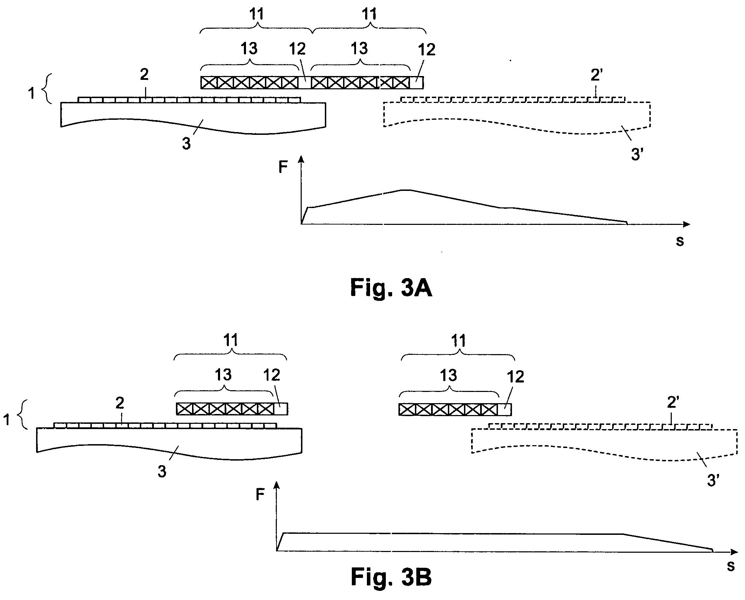

Eine in Figur 3A gezeigte Anordnung unterscheidet sich von der in Figur 1A gezeigten Anordnung dadurch, dass das rechte Statormodul 11 derart um 180° rotiert angeordnet ist, dass das linke Statormodul 11 mit einem wegsensorseitigen Ende einem spulenseitigen Ende des rechten Spulenkörpers 13 zugewandt angeordnet ist.

Zu Beginn einer Bewegung des Läufers 2 stehen alle Spulen der linken Spulenanordnung 13 mit dem Läufer 2 in Wechselwirkung, was zu dem im Diagramm in Figur 3A dargestellten Anstieg in der Antriebskraft F des Linearmotors 1 führt. Solange sich der Läufer 2 noch nicht im Wechselwirkungsbereich der rechten Spulenanordnung 13 befindet, bleibt die Antriebskraft F im Wesentlichen konstant. Gelangt der Läufer 2 in den Wechselwirkungsbereich der rechten Spulenanordnung 13, steigt die Antriebskraft F nach und nach bis zu einem Maximum an, solange sich der Läufer 2 noch in den Wechselwirkungsbereichen aller Spulen der linken Spulenanordnung 13 befindet. Währenddessen gelangt der Läufer 2 nach und nach in die Wechselwirkungsbereiche aller Spulen der rechten Spulenanordnung 13. Solange sich der Läufer 2 in den Wechselwirkungsbereichen aller Spulen der linken und der rechten Spulenanordnungen 13, 13 befindet, bleibt die Antriebskraft F des Linearmotors 1 konstant. Gelangt nun der Läufer 2 bei fortwährender Bewegung aus immer mehr Wechselwirkungsbereichen von Spulen der linken Spulenanordnung 13 heraus, fällt die Antriebskraft F des Linearmotors 1 ab. Ist der Läufer 2 aus dem Wechselwirkungsbereich der linken Spulenanordnung heraus gelangt, und befindet er sich noch in den Wechselwirkungsbereichen aller Spulen der rechten Spulenanordnung 13, bleibt die Antriebskraft F des Linearmotors 1 im Wesentlichen konstant. Bei fortwährender Bewegung gelangt der Läufer 2 aus immer mehr Wechselwirkungsbereichen von Spulen der rechten Spulenanordnung 13, was zu einem Abfallen der Antriebskraft F führt.

Wie im in Figur 3A dargestellten Diagramm erkennbar, hat die Kurve der Antriebskraft F in bezug auf die Verfahrwegstrecke s des Läufers 2 eine asymmetrische Form. Im Bereich eines ansteigenden Astes der Kurve ändert sich die Antriebskraft F in bezug auf einen Abschnitt der Verfahrwegstrecke s gleicher Länge stärker als in einem Bereich eines abfallenden Astes der Kurve.

Figur 3B zeigt die Anordnung von Figur 3A mit dem Unterschied, dass die Statormodule 11, 11 im Abstand zueinander angeordnet sind. Der Läufer 2 hat vorzugsweise eine Länge, die gleich einer Summe von Längen der linken und rechten Spulenanordnungen 13, 13, einer Länge eines Wegsensors 12 des linken Statormoduls 11 sowie eines Abstands der Statormodule 11, 11 zueinander ist. Bei einer Bewegung des Läufers 2 befindet sich dieser bereits in Wechselwirkungsbereichen aller Spulen der linken Spulenanordnung 13. Zunächst bleibt der Läufer 2 in Wechselwirkungsbereichen aller Spulen der linken Spulenanordnung 13, was zu einer konstanten Antriebskraft F des Linearmotors 1 führt. Beginnt der Läufer 2 in Wechselwirkungsbereiche von Spulen der rechten Spulenanordnung 13 zu gelangen, gelangt er in gleichem Maße aus Wechselwirkungsbereichen von Spulen der linken Spulenanordnung 13 heraus, sodass die Antriebskraft F des Linearmotors 1 weiterhin nahezu konstant bleibt. Gelangt der Läufer 2 bei fortwährender Bewegung nach und nach aus Wechselwirkungsbereichen von Spulen der rechten Spulenanordnung 13 heraus, führt dies zu einem Abfall in der Antriebskraft F des Linearmotors 1.

Bei dieser Anordnung ist es daher möglich, bei einem vergleichsweise großen, maximal möglichen Verfahrweg über einen Großteil des Verfahrwegs hinweg eine nahezu konstante Antriebskraft F des Linearmotors 1 zu realisieren.

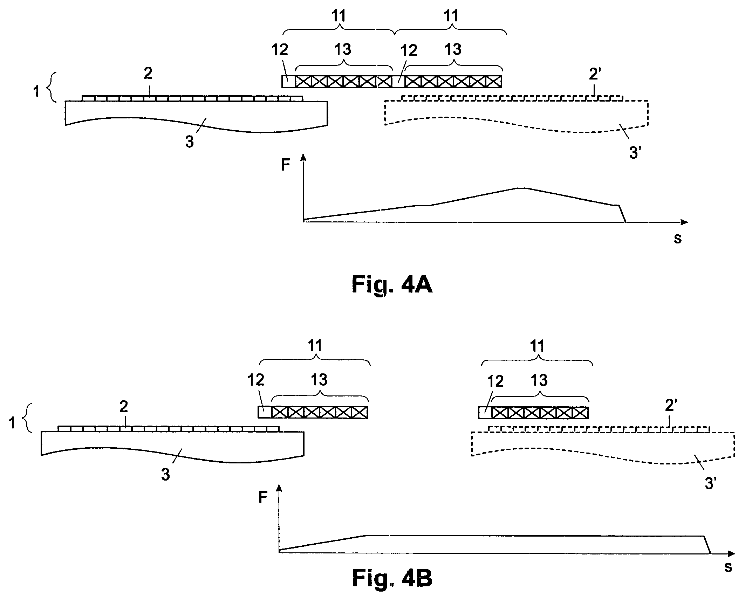

Die in Figur 4 gezeigte Anordnung unterscheidet sich von der in Figur 3 dargestellten darin, dass die Spulenanordnungen vertikal gespiegelt angeordnet sind. D. h. die Wegsensoren 12, 12 sind in Figuren 4A und 4B anstatt am jeweils rechten am jeweils linken Ende eines jeweiligen Statormoduls 11 angeordnet. Der Verlauf der Antriebskraft F des Linearmotors 1 verläuft in bezug auf die Ausführungsform gemäß Figuren 3 und 3B jeweils spiegelverkehrt.

Mit den vorstehend beschriebenen Anordnungen von Statormodulen 11 sind somit unterschiedliche Antriebskraftverläufe realisierbar.

In den Figuren wurden Anordnungen von Statormodulen 11, 11 gezeigt, die jeweils den Verlauf der jeweiligen Antriebskraft F des Linearmotors 1 zwischen jeweiligen maximal möglichen Endlagen des Läufers 2 darstellen. Es kann selbstverständlich eine Ansteuerlogik für den Linearmotor 1 vorgesehen sein, mittels der die tatsächlichen Endlagen versetzt sind, was zu einem Abschneiden der Kurve der Antriebskraft F des Linearmotors 1 an vorbestimmten Stellen auf der s-Koordinatenachse in den Diagrammen in den Figuren führt.

Anstelle einer Art von Statormodulen 11, 11 können selbstverständlich verschiedenartige Statormodule 11, 11 vorgesehen sein, d. h. Statormodule 11 mit verschiedenen Spulenanordnungen 13, 13. Die Spulenanordnungen 13, 13 der einzelnen Statormodule 11, 11 können unterschiedlich lang sein, d. h. verschiedene Anzahlen von Spulen aufweisen.

Zudem können sich die Bewicklungen der Spulen unterscheiden. Beispielsweise können Spulen ohne Wicklung versehen sein oder komplett fehlen, sodass die jeweilige Spulenanordnung 13 Lücken aufweist.

Zusätzlich kann zumindest ein Statormodul 11 an beiden Enden jeweils einen Wegsensor 12 aufweisen, was in bezug auf dieses Statormodul 11 zu einem Antriebskraftverlauf gemäß Figur 2A führt.

Sollte der Linearmotor 1 mehr als zwei Statormodule 11, 11 aufweisen, sind alle denkbaren Kombinationen der gezeigten Anordnungen von jeweils zwei Statormodulen 11, 11 zueinander möglich. Die jeweils gewählte Kombination hängt lediglich vom gewünschten Verlauf der Antriebskraft F des Linearmotors 1 ab.

Der Linearmotor 1 wurde vorstehend unter der Voraussetzung beschrieben, dass die Spulenanordnungen 13, 13 der zumindest zwei Statormodule 11 ständig bestromt werden. Allerdings bedeutet eine Spulenanordnung 13, die im Leerlauf arbeitet, d. h. wenn sich ein Läufer 2 nicht mit einem bestimmten Maß im Wechselwirkungsbereich der jeweiligen Spulenanordnung 13 befindet, reine Energieverschwendung. Auch könnten aufgrund des Leerlaufbetriebs und des daraufhin angestiegenen Stroms in der jeweiligen Spulenanordnung an dieser beispielsweise Schäden durch Hitzeentwicklung hervorgerufen werden. Aufgrund des hohen Strombedarfs ist zudem ein relativ großes Netzteil notwendig, von der Energieverschwendung ganz zu schweigen.

Daher weist der Linearmotor 1 gemäß einer vorteilhaften Weiterbildung ferner eine Ansteuerschaltung auf, die mit den zumindest zwei Statormodulen 11, 11 gekoppelt und eingerichtet ist, Erfassungssignale der Wegsensoren 12, 12 aufzunehmen bzw. einzulesen. Auf Basis der Erfassungssignale ermittelt die Ansteuerschaltung eine Position des zumindest einen Läufers 2 in bezug auf den Stator 10 und steuert die Spulenanordnungen 13, 13 der zumindest zwei Statormodule 11, 11 gemäß der ermittelten Position des Läufers 2 an.

Die Ansteuerschaltung ist vorzugsweise eingerichtet, jede Spulenanordnung 13 der zumindest zwei Statormodule 11, 11 separat abzuschalten, wenn die Ansteuerschaltung ermittelt, dass der Läufer 2 bei der ermittelten Position des Läufers 2 ein vorbestimmtes erstes Eindringmaß in einen vorbestimmten Abschnitt des Wechselwirkungsbereichs einer jeweiligen Spulenanordnung 13 unterschreitet. Dadurch werden ein unerwünschter Leerlaufbetrieb des jeweiligen Statormoduls 11 verhindert und Schäden vermieden. Ferner kann dadurch ein vergleichsweise kleineres Netzteil verwendet werden, was Kosten sparen hilft. Zudem kann das Abschalten genutzt werden, die Kurve der Antriebskraft F des Linearmotors 1 an vorbestimmte Erfordernisse anzupassen. Beispielsweise können durch eine Abschaltautomatik das Ansteigen der Antriebskraft F bei der in Figur 1 A gezeigten Anordnung auf den im Diagramm mittleren, maximalen Wert verhindert und/oder der Maximalwert verringert werden.

Die Ansteuerschaltung kann ferner eingerichtet sein, zumindest eine Spulenanordnung 13 eines der zumindest zwei Statormodule 11, 11 abzuschalten, wenn die Ansteuerschaltung ermittelt, dass die ermittelte Position des Läufers 2 einer Endlage des zumindest einen Läufers 2 entspricht. Dies ist insbesondere bei umlaufenden Verfahrwegen nützlich, bei denen die Endlagen nicht mittels der Statormodule 11, 11 festgelegt werden können. Ein zweiter Anwendungsfall ist, wenn die tatsächliche Endlage nicht einer maximal möglichen Endlage entspricht. Beispielsweise bei der in Figur 2A gezeigten Anordnung kann es sein, dass die Antriebskraft F zu Beginn einer Bewegung des Läufers 2 zu gering ist. Um dies zu ändern, werden die Endlagen in Figur 2A aufeinander zu bewegt, was gemäß der im korrespondierenden Diagramm dargestellten Kurve der Antriebskraft F des Linearmotors 1 eine größere Anfangs- und End-Antriebskraft bedeutet.

Zudem ist die Ansteuerschaltung vorzugsweise ferner eingerichtet, zumindest eine Spulenanordnung 13 eines der zumindest zwei Statormodule 11, 11 zuzuschalten, wenn die Ansteuerschaltung ermittelt, dass der Läufer 2 bei der ermittelten Position des Läufers 2 ein vorbestimmtes zweites Eindringmaß in einen vorbestimmten Abschnitt des Wechselwirkungsbereichs einer jeweiligen Spulenanordnung 13 erreicht oder überschritten hat. Dies dient dem Zweck, eine abgeschaltete Spulenanordnung 13 mit Strom zu versorgen, um ein Weiterbewegen des jeweiligen Läufers 2 zu gewährleisten.

Vorzugsweise sind das erste und das zweite Eindringmaß gleich.

Die in den Figuren dargestellten Anordnungen stellen jeweils Extremsituationen, d. h. Statormodule 11, 11 mit keinem oder maximalem Abstand zueinander, dar. Es sind selbstverständlich alle anderen, dazwischen liegenden Abstände zwischen den Statormodulen 11 möglich.

Im Fall solcher kleinerer Abstände sind die beschriebenen Ab- und Zuschaltautomatiken mittels der Ansteuerschaltung besonders sinnvoll. Beispielsweise ist es bei einer Anordnung gemäß Figur 1D bei geringeren Abständen der Statormodule zueinander möglich, eine nahezu konstante Kurve der Antriebskraft F des Linearmotors 1 zu erreichen. Ein geringerer Abstand der Statormodule zueinander bedeutet ferner die Möglichkeit, einen jeweiligen Läufer 2 kürzer ausführen zu können, was Material und insbesondere bei Einsatz von Hochleistungsmagneten Kosten einsparen hilft. Der jeweilige Läufer 2 muss nicht zwangsläufig über eine gesamte Breite des zu bewegenden Teils 3 hinweg ausgebildet sein.

Zudem bietet ein Abstand zwischen zwei unmittelbar benachbarten Statormodulen 11, 11 einen Raum für zusätzliche Einrichtungen, wie beispielsweise eine Rauchmelde-Sensorik.

Auch kann der hierin beschriebene Läufer 2, sofern er Permanentmagneten aufweist, so ausgebildet sein, dass er Lücken in der Reihe von Permanentmagneten aufweist, die mittels Zwischenstücken aus magnetisierbarem Material ausgefüllt sein können.

### Bezugszeichenliste

- 1: Linearmotor
- 2: Läufer
- 2': Läufer
- 3: Schiebetürflügel
- 3': Schiebetürflügel

- 10: Stator
- 11: Statormodul
- 12: Wegsensor
- 13: Spulenanordnung

- F: Antriebskraft

- s: Verfahrwegstrecke
- Δs₁: Abschnitt der Verfahrwegstrecke s
- Δs₂: Abschnitt der Verfahrwegstrecke s

## Patentansprüche

1. Linearmotor (1), aufweisend
• einen Stator (10) und
• zumindest einen Läufer (2),
• wobei der Stator (10) zumindest zwei Statormodule (11, 11) aufweist,
• wobei jedes Statormodul (11)
- eine Spulenanordnung (13) aufweist, die aus einer Reihe von, in Längserstreckung des jeweiligen Statormoduls (11) gesehen, hintereinander angeordneten Spulen gebildet ist, die gemäß einem Anschlussschema mit Wicklungsdraht bewickelt und untereinander verschaltet sind, und,
- in Längserstreckung des jeweiligen Statormoduls (11) gesehen, zumindest an einem Ende einen Wegsensor (12) aufweist, wobei die Spulenanordnung (13) und zumindest ein Wegsensor (12) hintereinander angeordnet sind,
- entlang eines Verfahrwegs des Läufers (2) in einem Bereich des Verfahrwegs angeordnet ist,
• wobei jeder Wegsensor (12) jeweils einen Erfassungsbereich aufweist, innerhalb dessen er den Läufer (2) erfassen kann, sofern sich ein Abschnitt des zumindest einen Läufers (2) im jeweiligen Erfassungsbereich befindet,
• wobei jede Spulenanordnung (13, 13) jeweils einen Wechselwirkungsbereich aufweist, innerhalb dessen die Spulenanordnung (13), bei einer Bestromung, mit dem Läufer (2) in Wechselwirkung tritt und diesen in eine Antriebsrichtung drängt, sofern sich ein Abschnitt des zumindest einen Läufers (2) im jeweiligen Wechselwirkungsbereich befindet,
• wobei die zumindest zwei Statormodule (11, 11) und der zumindest eine Läufer (2) derart angeordnet und ausgebildet sind, dass sich jederzeit ein Teil des zumindest einen Läufers (2) zumindest in dem Erfassungsbereich eines Wegsensors (12) und ein anderer Teil des zumindest einen Läufers (2) zumindest in dem Wechselwirkungsbereich einer Spulenanordnung (13) befindet,
• wobei zwei unmittelbar benachbart angeordnete Statormodule (11, 11) der zumindest zwei Statormodule (11, 11) in bezug auf eine Ausrichtung ihrer Wegsensoren (12) zueinander hinsichtlich des jeweils anderen, unmittelbar benachbart angeordneten Statormoduls (11) gemäß einer Länge des zumindest einen Läufers (2), gemäß einem Verfahrweg des zumindest einen Läufers (2) und gemäß einem vorbestimmten Verlauf einer Antriebskraft (F) des Linearmotors (1) in Abhängigkeit von einer Verfahrwegstrecke (s) des Läufers (2) angeordnet sind,
• wobei die zumindest zwei unmittelbar benachbart angeordneten Statormodule (11, 11) mit einander zugewandten Wegsensoren (12) angeordnet sind.

2. Linearmotor (1) gemäß Anspruch 1, wobei zwei unmittelbar benachbart angeordnete Statormodule (11, 11) der zumindest zwei Statormodule (11, 11) zueinander einen Abstand gemäß der Länge des zumindest einen Läufers (2), gemäß dem Verfahrweg des zumindest einen Läufers (2) und gemäß dem vorbestimmten Verlauf der Antriebskraft (F) des Linearmotors (1) in Abhängigkeit von der Verfahrwegstrecke (s) des zumindest einen Läufers (2) aufweisen.

3. Linearmotor (1) gemäß einem der vorhergehenden Ansprüche, wobei die Wegsensoren (12, 12) mittels Hall-Sensoren gebildet sind.

4. Linearmotor (1) gemäß einem der vorhergehenden Ansprüche, ferner aufweisend eine Ansteuerschaltung, die mit den zumindest zwei Statormodulen (11, 11) gekoppelt und eingerichtet ist, Erfassungssignale der Wegsensoren (12, 12) aufzunehmen bzw. einzulesen, eine Position des zumindest einen Läufers (2) in bezug auf den Stator (10) zu ermitteln und die Spulenanordnungen (13, 13) der zumindest zwei Statormodule (11, 11) gemäß der ermittelten Position des zumindest einen Läufers (2) anzusteuern.

5. Linearmotor (1) gemäß Anspruch 4, wobei die Ansteuerschaltung ferner eingerichtet ist, zumindest eine Spulenanordnung (13) eines der zumindest zwei Statormodule (11, 11) abzuschalten, wenn die Ansteuerschaltung ermittelt, dass die ermittelte Position des zumindest einen Läufers (2) einem Unterschreiten eines vorbestimmten ersten Eindringmaßes des zumindest einen Läufers (2) in einen vorbestimmten Abschnitt des Wechselwirkungsbereichs der einen Spulenanordnung (13) entspricht.

6. Linearmotor (1) gemäß Anspruch 4 oder 5, wobei die Ansteuerschaltung ferner eingerichtet ist, zumindest eine Spulenanordnung (13) eines der zumindest zwei Statormodule (11, 11) abzuschalten, wenn die Ansteuerschaltung ermittelt, dass die ermittelte Position des Läufers (2) einer vorbestimmten Endlage des zumindest einen Läufers (2) entspricht.

7. Linearmotor (1) gemäß einem der Anspruch 4 bis 6, wobei die Ansteuerschaltung ferner eingerichtet ist, zumindest eine Spulenanordnung (13) eines der zumindest zwei Statormodule (11, 11) zuzuschalten, wenn die Ansteuerschaltung ermittelt, dass die ermittelte Position des zumindest einen Läufers (2) einem vorbestimmten zweiten Eindringmaß des zumindest einen Läufers (2) in den Wechselwirkungsbereich der einen Spulenanordnung (13) oder einem Überschreiten des zweiten Eindringmaßes entspricht.

8. Linearmotor gemäß Anspruch 7, wobei das erste und das zweite Eindringmaß gleich sind.

## Claims

1. A linear motor (1), including
• a stator (10) and
• at least one rotor (2),
• wherein the stator (10) includes at least two stator modules (11, 11),
• wherein each stator module (11)
- includes a coil arrangement (13), which, when seen in longitudinal extension of the respective stator module (11), is formed from a row of consecutively disposed coils, which are wired with winding wire and connected to each other according to a wiring diagram, and
- when seen in longitudinal extension of the respective stator module (11), includes a displacement sensor (12) at least at one end,
- wherein the coil arrangement (13) and the at least one displacement sensor (12) are disposed one after the other,
- is disposed along a displacement path of the rotor (2) in an area of the displacement path,
• wherein each displacement sensor (12) has a detection range, within which it can detect the rotor (2), as long as a portion of the at least one rotor (2) is located in the respective detection range,
• wherein each coil arrangement (13, 13) has an interaction range, within which, in case of energizing, the coil arrangement (13) reaches interaction with the rotor (2) and urges the latter in a driving direction, as long as a portion of the at least one rotor (2) is located in the interaction range,
• wherein the at least two stator modules (11, 11) and the at least one rotor (2) are disposed and configured such that, at all times, a portion of the at least one rotor (2) is located at least in the detection range of a displacement sensor (12) and another portion of the at least one rotor (2) is located at least in the interaction range of a coil arrangement (13),
• wherein two directly adjacently disposed stator modules (11, 11) of the at least two stator modules (11, 11), with regard to an orientation of their displacement sensors (12) to each other, are disposed with regard to the respective other directly adjacently disposed stator module (11), according to a length of the at least one rotor (2), according to a displacement path of the at least one rotor (2) and according to a predetermined characteristic course of a driving force (F) of the linear motor (1) depending on a displacement path distance (s) of the rotor (2),
• wherein the at least two directly adjacently disposed stator modules (11, 11) are disposed with displacement sensors (12) facing each other.

2. The linear motor (1) according to claim 1, wherein two directly adjacently disposed stator modules (11, 11) of the at least two stator modules (11, 11) have a distance to each other according to the length of the at least one rotor (2), according to the displacement path of the at least one rotor (2), and according to the predetermined characteristic course of the driving force (F) of the linear motor (1) depending on the displacement distance (s) of the at least one rotor (2).

3. The linear motor (1) according to any of the preceding claims, wherein the displacement sensors (12, 12) are formed by means of Hall sensors.

4. The linear motor (1) according to any of the preceding claims, furthermore having a control circuit, which is coupled to the at least two stator modules (11, 11) and adapted to pick up, respectively to read detection signals of the displacement sensors (12, 12), to determine a position of the at least one rotor (2) with regard to the stator (10), and to control the coil arrangements (13, 13) of the at least two stator modules (11, 11) according to the determined position of the at least one rotor (2).

5. The linear motor (1) according to claim 4, wherein the control circuit is furthermore adapted to switch off at least one coil arrangement (13) of one of the at least two stator modules (11, 11), if the control circuit determines that the determined position of the at least one rotor (2) corresponds to falling below a predetermined first penetration measure of the at least one rotor (2) into a predetermined section of the interaction range of the one coil arrangement (13).

6. The linear motor (1) according to claim 4 or 5, wherein the control circuit is furthermore adapted to switch-off at least one coil arrangement (13) of one of the at least two stator modules (11, 11), if the control circuit determines that the determined position of the rotor (2) corresponds to a predetermined terminal position of the at least one rotor (2).

7. The linear motor (1) according to any of the claims 4 to 6, wherein the control circuit is furthermore adapted to additionally switch-on at least one coil arrangement (13) of one of the at least two stator modules (11, 11), if the control circuit determines that the determined position of the at least one rotor (2) corresponds to a predetermined second penetration measure of the at least one rotor (2) into the interaction range of the one coil arrangement (13) or to exceeding the second penetration measure.

8. The linear motor according to claim 7, wherein the first and second penetrations measures are equal.

## Revendications

1. Moteur linéaire (1), comprenant
• un stator (10), et
• au moins un rotor (2),
• le stator (10) comprenant au moins deux modules de stator (11, 11),
• chaque module de stator (11)
- comprenant un agencement de bobines (13) lesquelles, vues en extension longitudinale du module de stator respectif (11), sont aménagées d'une rangée de bobines agencées les unes après les autres, qui sont embobinées avec du fil d'enroulement selon un schéma de bobinage et sont interconnectées les unes aux autres, et
- vu en extension longitudinale du module de stator (11) respectif, comprend un capteur de déplacement (12) à au moins une extrémité,
- l'agencement de bobines (13) et au moins un capteur de déplacement (12) étant agencés l'un après l'autre,
- est agencé le long d'un chemin de déplacement du rotor (2) dans une région du chemin de déplacement,
• chaque capteur de déplacement (12) comprenant respectivement une région de détection, au sein de laquelle il est en mesure de détecter le rotor (2), dans la mesure qu'une portion dudit au moins un rotor (2) se trouve dans la région de détection respective,
• chaque agencement de bobines (13, 13) comprenant respectivement une région d'interaction, au sein de laquelle l'agencement de bobines (13), lors d'une alimentation en courant, entre en interaction avec le rotor (2) et le pousse vers une direction d'entraînement, dans la mesure où une portion dudit au moins un rotor (2) se trouve dans la région d'interaction respective,
• lesdits au moins deux modules de stator (11, 11) et ledit au moins un rotor (2) sont agencés et aménagés de telle façon qu'au moins une portion dudit au moins un rotor (2) se trouve en tout temps au moins dans la région de détection d'un capteur de déplacement (12) et une autre partie dudit au moins un rotor (2) se trouve au moins dans la région d'interaction d'un agencement de bobines (13),
• deux modules de stator (11, 11) agencés directement avoisinants l'un de l'autre desdits au moins deux modules de stator (11, 11) sont agencés par rapport à un alignement de leurs capteurs de déplacement (12) l'un à l'autre respectivement par rapport à l'autre module de stator (11) directement avoisinant selon une longueur dudit au moins un rotor (2), selon un chemin de déplacement dudit au moins un rotor (2), et selon une course caractéristique prédéterminée d'une force d'entraînement (F) du moteur linéaire (1) en fonction d'un trajet de chemin de déplacement (s) du rotor (2),
• lesdits au moins deux modules de stator (11, 11) agencés directement avoisinants étant agencés avec des capteurs de déplacement (12) orientés l'un vers l'autre.

2. Moteur linéaire (1) selon la revendication 1, dans lequel deux modules de stator (11, 11) agencées directement avoisinants desdits au moins deux modules de stator (11, 11) présentent une distance en fonction de la longueur dudit au moins un rotor (2), selon le chemin de déplacement dudit au moins un rotor (2) et selon la course caractéristique prédéterminée de la force d'entraînement (F) du moteur linéaire (1) en fonction du trajet de chemin de déplacement (s) dudit au moins un rotor (2).

3. Moteur linéaire (1) selon l'une des revendications précédentes, dans lequel les capteurs de déplacement (12, 12) sont aménagés au moyen de capteurs Hall.

4. Moteur linéaire (1) selon l'une des revendications précédentes, comprenant en plus un contrôle d'activation, lequel est accouplé auxdits au moins deux modules de stator (11, 11) et adapté à détecter, respectivement à lire des signaux de détection des capteurs de déplacement (12, 12), à déterminer une position dudit au moins un rotor (2) par rapport au stator (10), et d'activer l'agencement de bobines (13, 13) desdits au moins deux modules de stator (11, 11) selon la position déterminée dudit au moins un rotor (2).

5. Moteur linéaire (1) selon la revendication 4, dans lequel le contrôle d'activation est en plus adapté à couper au moins un agencement de bobines (13) d'un desdits au moins deux modules de stator (11, 11) lorsque le contrôle d'activation détermine que la position déterminée dudit au moins un rotor (2) correspond à un sous-dépassement d'une première mesure de pénétration prédéterminée dudit au moins un rotor (2) dans une portion prédéterminée de la région d'interaction dudit un agencement de bobines (13).

6. Moteur linéaire (1) selon la revendication 4 ou 5, dans lequel le contrôle d'activation est en plus adapté à couper au moins un agencement de bobines (13) d'un desdits au moins deux modules de stator (11, 11) lorsque le contrôle d'activation détermine que la position déterminée dudit rotor (2), correspond à un position terminale prédéterminée dudit au moins un rotor (2).

7. Moteur linéaire (1) selon l'une des revendications 4 à 6, dans lequel le contrôle d'activation est en plus adapté à activer en plus au moins un agencement de bobines (13) d'un desdits au moins deux modules de stator (11, 11), lorsque le contrôle d'activation détermine que la position déterminée dudit au moins un rotor (2) correspond à une deuxième mesure de pénétration prédéterminée dudit au moins un rotor (2) dans une région d'interaction dudit un agencement de bobines (13) ou à un dépassement de la deuxième mesure de pénétration.

8. Moteur linéaire selon la revendication 7, dans lequel la première et la deuxième mesure de pénétration sont identiques.
